# EUROPÄISCHE PATENTSCHRIFT

(11) **EP 1 263 571 B1**
(45) Veröffentlichungstag und Bekanntmachung des Hinweises auf die Patenterteilung: **03.11.2004**
(21) Anmeldenummer: 01900353.2
(22) Anmeldetag: 19.01.2001
(51) Int. Cl.: B31D 1/02, B31F 1/00, B29C 53/36

(54) **VERFAHREN UND ANLAGE ZUM FALTEN EINES TEXTILEN BANDABSCHNITTES, INSBESONDERE EINES ETIKETTENBANDABSCHNITTES**
METHOD AND INSTALLATION FOR FOLDING A TEXTILE STRIP LENGTH, IN PARTICULAR A STRIP LENGTH FOR A LABEL
PROCEDE ET INSTALLATION PERMETTANT DE PLIER UNE SECTION BANDE DE TEXTILE, NOTAMMENT UNE SECTION BANDE D'ETIQUETTE

(30) Priorität: 07.03.2000 CH 4402000
(43) Veröffentlichungstag der Anmeldung: 11.12.2002
(73) Patentinhaber: TEXTILMA AG, 6052 Hergiswil / NW (CH)
(72) Erfinder: ENGESSER, Bernhard, CH-9200 Gossau (CH)
(74) Vertreter: Schmauder, Klaus Dieter
(86) Internationale Anmeldenummer: PCT/CH2001/000041
(87) Internationale Veröffentlichungsnummer: WO 2001/066343

(56) Entgegenhaltungen:
- IT-B- 1 268 836
- US-A- 3 148 874

## Beschreibung

### Technisches Gebiet

Die Erfindung betrifft ein Verfahren zum Falten eines textilen Bandabschnittes, insbesondere eines Etikettenbandabschnittes gemäss Oberbegriff des Anspruches 1 sowie eine Anlage zur Ausführung des Verfahrens gemäss Oberbegriff des Anspruches 2.

### Stand der Technik

Verfahren und Anlagen der eingangs genannten Art sind bekannt, so z.B. aus der IT-1 268 836 B. Bei dem dort beschriebenen Verfahren und der Anlage zu dessen Durchführung wird ein Bandabschnitt zunächst nahe einer zu bildenden Bilfsfaltkante, deren Richtung der definitiven Faltkante parallel ist, festgehalten. Der überstehende Bandteil übergreift einen aus zwei Klemmgliedern gebildeten Spalt, wobei deren Klemmflächen senkrecht zur Ebene der Bandabschnitte ausgerichtet sind. Ein flacher Stecher stösst diesen Bandteil unter Bildung einer Falte in den Spalt ein und muss dann wieder zurückgezogen werden, bevor die gebildete Falte durch ein Aneinanderpressen der Klemmflächen geglättet und fixiert wird. Dabei ergibt sich das Problem, dass beim Herausziehen des Stechers die gebildete Falte leicht verändert oder gar zerstört wird. Selbst wenn die Falte ordnungsgemäss geglättet und fixiert ist, ergibt sich der weitere Nachteil, dass diese Faltung um die Hilfsfaltkante senkrecht zur Bandebene ausgerichtet ist. Durch den Glättungsund Fixiervorgang wird auch diese Hilfsfalte zunächst fixiert, so dass beim fertig gefalteten Bandabschnitt die gefalteten Bandteile senkrecht zur Ebene der Bandabschnitte abstehen, was unerwünscht ist und in der Regel eine Nachbearbeitung der gefalteten Bandabschnitte erforderlich macht.

Aus der US 3 148 874 A ist ein anderes Verfahren und eine andere Anlage zum Falten eines textilen Bandabschnittes bekannt, wobei der Bandabschnitt zunächst neben einer zu bildenden Faltkante mittels eines L-förmigen Haltegliedes festgehalten wird. Der überstehende Bandteil wird mittels eines Faltgliedes zunächst senkrecht zur Ebene des Bandabschnittes gefaltet und dann über einen Haltefuss des L-förmigen Haltegliedes parallel zur Ebene des Bandabschnittes umgelegt. Der Haltefuss des L-förmigen Haltegliedes muss dann wieder zurückgezogen werden, bevor die gebildete Falte durch ein Aneinanderpressen von Klemmflächen, die parallel zum Bandabschnitt ausgerichtet sind, geglättet und fixiert wird. Die gebildete Falte liegt zwar bereits in der Ebene des Bandabschittes aber es ergibt sich auch hier das Problem, dass beim Herausziehen des Haltefusses die gebildete Falte leicht verändert oder gar zerstört werden kann.

### Darstellung der Erfindung

Aufgabe der Erfindung ist es, ein Verfahren und eine Anlage zum Falten eines textilen Bandabschnittes, insbesondere eines Etikettenbandabschnittes zu verbessern, so dass die erwähnten Nachteile nicht mehr auftreten.

Diese Aufgabe wird erfindungsgemäss gelöst durch
a) ein Verfahren gemäss Anspruch 1; und
b) eine Anlage zu dessen Ausführung gemäss Anspruch 2.

Dadurch, dass der um eine Hilfsfaltkante abgewinkelte Bandteil erfasst und gegen eine Klemmfläche gestaucht und damit gefaltet wird, die im wesentlichen coplanar zur Ebene des Bandabschnittes ausgerichtet ist, ergeben sich zwei entscheidende Vorteile. Da beim Stauchen das Stauchwerkzeug nicht in die Falte oder einen Spalt zwischen den Klemmgliedern eingreift, kann es solange im Einsatz bleiben, bis die Klemmflächen die Falten erfasst und fixiert haben, so dass stets eine exakte Ausrichtung und Formung der Falten gegeben ist und ein Verrutschen eindeutig verhindert wird. Überdies liegen die Klemmflächen im wesentlichen in der Ebene des Bandabschnittes, so dass die gefalteten, geglätteten und fixierten Falten des Bandabschnittes ebenfalls in der Ebene des Bandabschnittes liegen und die Hilfsfaltkante eliminiert ist, so dass ein einwandfreier, ebener, gefalteter Bandabschnitt entsteht und eine Nachbehandlung nicht mehr erforderlich ist.

Zur Ausführung des Verfahrens sind verschiedene Anlagen denkbar. So ist es z.B. möglich Auflageglieder, auf denen Bandabschnitte zur Bearbeitung aufliegen, ruhend anzuordnen und Falt- und Klemmwerkzeuge gegen den ruhenden Auflagestempel zu verfahren. Besonders vorteilhaft ist jedoch eine Anlage gemäss Anspruch 2 zur Ausführung des Verfahrens.

Vorteilhafte Weiterbildungen der Anlage sind in den Ansprüchen 3 bis 21 beschrieben.

Für das Falten des über die Auflagefläche des Auflagegliedes vorstehenden Bandteiles ergeben sich verschiedene Möglichkeiten. So kann das Auflageglied ruhend angeordnet sein und das vorspannbare Halteglied gegen die Auflagefläche vorgespannt sein. Ein entsprechendes Faltglied kann dann längs des Auflagegliedes bewegt werden, um den überstehenden Bandteil gegen die Stützfläche umzulegen. Eine besonders bevorzugte Lösung umschreibt hingegen der Anspruch 3.

Auch für die Ausgestaltungen des Faltgliedes ergeben sich diverse Möglichkeiten. So kann beispielsweise ein Spachtel über die Hilfsfaltkante des Auflagegliedes und längs der Stützfläche bewegt werden, um den überstehenden Bandteil gegen die Stützfläche umzulegen. Besonders vorteilhaft ist jedoch die Ausgestaltung nach Anspruch 4, wonach das Faltglied eine schräge Auflauffläche aufweist, die bei einer Relativbewegung zwischen Auflageglied und Faltglied einen über die Auflagefläche vorstehenden Bandteil um die Hilfsfaltkante gegen die Stützfläche umlegt. Um ein sicheres Umlegen zu ermöglichen, sind das Auflageglied und das Faltglied gemäss Anspruch 5 gegeneinander vorgespannt.

Besonders zweckmässig ist es, wenn das Faltglied nach Anspruch 6 auch als Klemmglied ausgebildet ist, gegen das das andere Klemmglied vorgespannt ist. Diese Vorspannung kann mit verschiedenen Mitteln erzeugt werden, so beispielsweise mit elektromagnetischen oder fluidbetätigten Mitteln. Besonders vorteilhaft ist jedoch die Vorspannung mittels einer Feder. Dies erleichtert auch das Abheben des Klemmgliedes mittels des relativ dazu bewegbaren Auflagegliedes.

Der Anspruch 7 beschreibt eine sehr einfache Lösung für das Vorspannen des Haltegliedes gegen das Auflageglied und die Steuerung des Haltegliedes. Für die Steuerung der Klemmglieder gibt es verschiedene Ausgestaltungsmöglichkeiten zur Betätigung und Steuerung. Der Anspruch 8 beschreibt eine sehr einfache mechanische Zwangsfolge für das Öffnen und Schliessen der Klemmglieder.

Gemäss Anspruch 9 ist mindestens eines der Klemmglieder mit einem Heizelement versehen.

Die Ausgestaltung der Anlage nach Anspruch 10 ermöglicht einen fortlaufenden Betrieb der Anlage. Hierzu ist eine Weiterbildung nach Anspruch 11 von Vorteil. Zum Antrieb der Fördereinrichtung können die verschiedensten Mittel eingesetzt werden, so beispielsweise ein Schrittmotor, ein normaler Motor mit Endschaltersteuerung, ein Malteserkreuzantrieb oder dergleichen.

Grundsätzlich ist es möglich, die Anlage so auszubilden, dass ein Bandabschnitt nur an einem Ende mit einer Falte versehen wird. Bei Etiketten sind jedoch zwei Falten an beiden Enden erwünscht, so dass eine Weiterbildung der Anlage nach Anspruch 12 von Vorteil ist. Um die Anlage auf Bandabschnitte verschiedener Länge einstellen zu können, ist ein Satz der Werkzeuge relativ zum anderen Satz verschiebbar angeordnet, um den gegenseitigen Abstand auf die gewünschte Länge des Bandabschnittes einstellen zu können.

Die Anlage weist zweckmässigerweise nach Anspruch 13 eine Liefervorrichtung für die Bandabschnitte zu dem Auflageglied auf. Eine solche Liefervorrichtung ist vorteilhafterweise nach Anspruch 14 ausgestaltet, um ein kontinuierliches Band zuzuführen, von dem an einer entsprechenden Trennvorrichtung Bandabschnitte abgetrennt werden. Gemäss Anspruch 15 kann die Zuführvorrichtung mit einem Förderelement ausgestattet sein, bei dem die Länge des abzutrennenden Bandabschnittes einstellbar ist. Eine besonders anpassungsfähige Anlage ergibt sich, wenn gemäss Anspruch 16 die Trennvorrichtung sowohl eine mechanische Schneidvorrichtung wie auch eine thermische Schneidvorrichtung, beispielsweise eine Infrarot- oder Ultraschall-Schneidvorrichtung, aufweist, die wahlweise einsetzbar sind.

Zweckmässigerweise ist die Anlage nach Anspruch 17 mit einer Stapelvorrichtung für die gefalteten Bandabschnitte ausgestattet, wobei es sich als vorteilhaft erwiesen hat, die Stapelvorrichtung nach Anspruch 18 mit einem Magazin auszurüsten, in dem die gefalteten Bandabschnitte gegen einen Verschiebewiderstand einbringbar und haltbar sind.

Besonders vorteilhaft ist es auch, dass sowohl das Verfahren wie die Anlage für die verschiedensten Faltungen geeignet sind, so nicht nur gemäss Anspruch 19 zur Herstellung von Bandabschnitten mit einer oder zwei Endfaltungen sondern auch gemäss Anspruch 20 zur Herstellung von Bandabschnitten mit Mittenfaltung. Nach Anspruch 21 ist sogar die Herstellung von Bandabschnitten mit Diagonalfaltung denkbar. Dies ist möglich, da das Falten lediglich durch einen Stauchvorgang gegen eine ebene Klemmfläche erfolgt, die überdies im wesentlichen in oder parallel zur Ebene der Bandabschnitte ausgerichtet ist, so dass die Faltung an beliebiger Stelle des Bandabschnittes und bei beliebiger Ausrichtung der Hilfsfaltkante durchführbar ist. Dies ermöglicht es, nur einfache Werkzeuge zu verwenden, die an ein und derselben Anlage auch ohne weiteres austauschbar sein können.

### Kurze Beschreibung der Zeichnungen

Ausführungsbeispiele der Erfindung werden nachfolgend anhand schematischer Zeichnungen näher beschrieben, dabei zeigen:
- Figur 1: eine Anlage zum Falten eines textilen Bandabschnittes, insbesondere eines Etikettenbandabschnittes in Draufsicht;
- Figur 2: die Anlage der Figur 1 in Seitenansicht;
- Figuren 3a bis 3c: die Faltstation der Anlage nach Figur 1 im Ausschnitt, im Längsschnitt und in verschiedenen Betriebsstellungen;
- Figuren 4a bis 4g: das Prinzip der Faltung an der Faltstation gemäss den Figuren 3a bis 3c in schematischer Darstellung und in verschiedenen Zwischenstufen vom Einlegen eines Bandabschnittes bis zum Ablegen des gefalteten Bandabschnittes;
- Figur 5: die Faltstation zur Herstellung eines Bandabschnittes mit Mittenfaltung im Grundriss;
- Figur 6: die Faltstation gemäss Figur 5 im Längsschnitt;
- Figur 7: die Faltstation zur Herstellung eines Bandabschnittes mit Diagonalfaltung im Grundriss; und
- Figur 8: die Faltstation der Figur 7 im Längsschnitt.

### Wege zur Ausführung der Erfindung

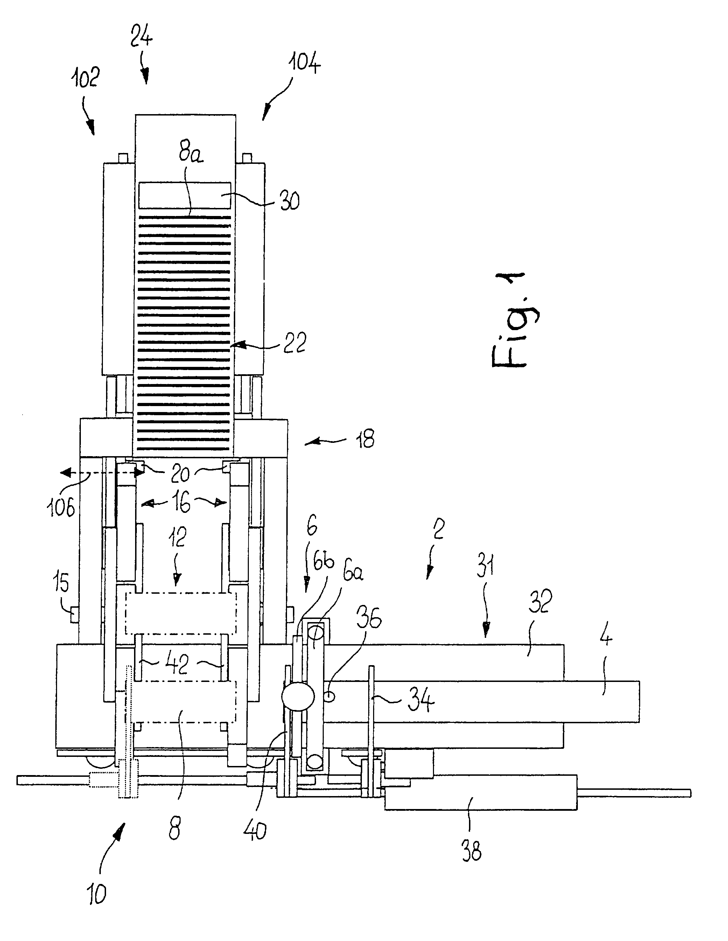

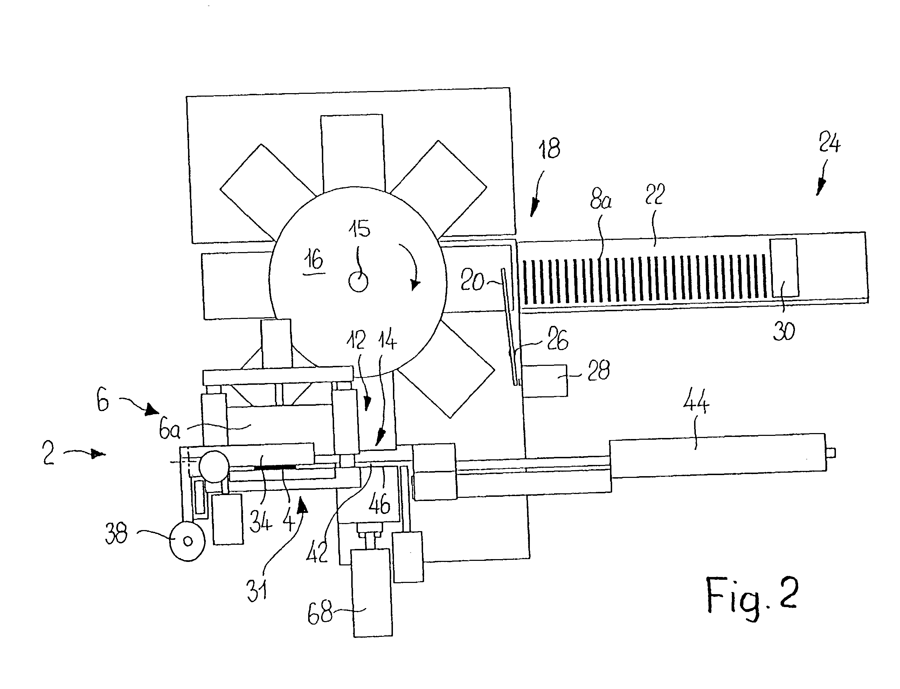

Die Figuren 1 und 2 zeigen in schematischer Darstellung eine Anlage zum Falten eines textilen Bandabschnittes, insbesondere eines Etikettenbandabschnittes. Die Anlage enthält eine Liefervorrichtung 2, an der von einem endlosen Band 4 mittels einer Trennvorrichtung 6 Bandabschnitte 8 abgetrennt und mittels einer Überführvorrichtung 10 einer Faltstation 12 zugeführt werden. An der Faltstation 12 werden die Bandabschnitte 8 an den Enden gefaltet und die gefalteten Bandabschnitte 8a werden an Klemmwerkzeugen 14 einer karussellartigen Fördervorrichtung 16 festgehalten, die über eine Welle 15 drehbar gelagert ist. Die gefalteten Bandabschnitte 8a werden so von der Faltstation 12 an eine Entladestation 18 weiter gefördert, wo sie mittels Hebearmen 20 an ein Magazin 22 einer Stapelvorrichtung 24 überführt werden. Die um einen Drehpunkt 26 drehbar gelagerten Hebearme 20 werden mittels eines Aktuators 28 betätigt und geben die gefalteten Bandabschnitte 8a gegen einen Verschiebewiderstand 30 an das Magazin 22 ab.

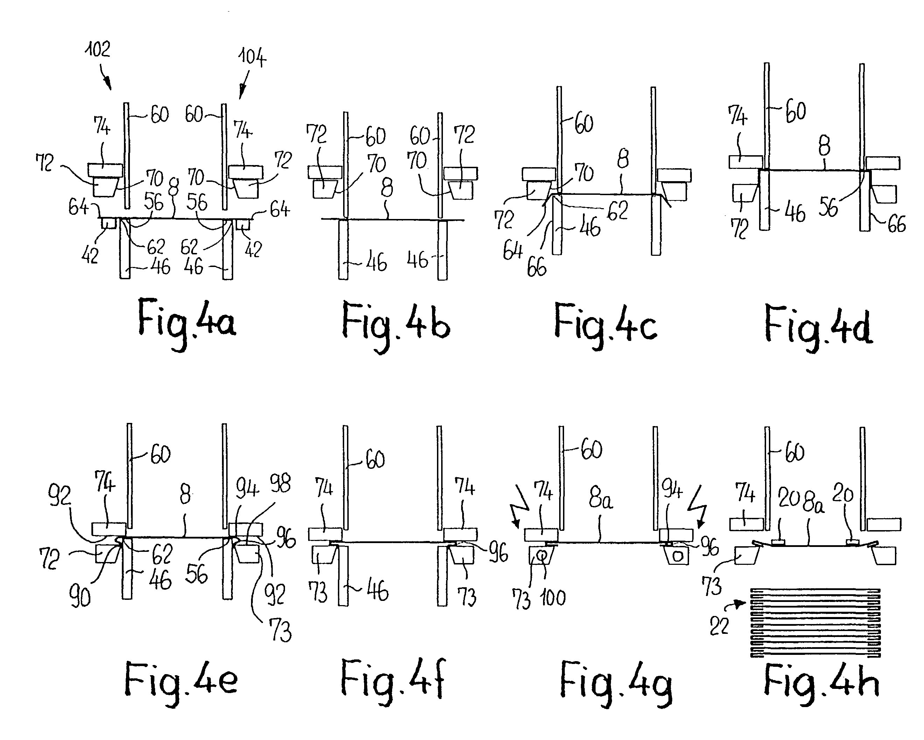

Die Liefervorrichtung 2 enthält eine Zuführvorrichtung 31 mit einem Auflagetisch 32, auf dem ein endloses Band 4 von einer nicht näher dargestellten Vorratsrolle mittels eines Förderelementes 34 der Trennvorrichtung 6 in der gewünschten Länge des Bandabschnittes zugeführt wird. Das Förderelement 34 kann beispielsweise ein hin- und hergehender Förderarm oder eine angetriebene Förderwalze sein. Die zu fördernde Bandlänge wird durch einen Sensor 36 ermittelt, der auf Bandmarken des zugeführten Bandes 4 anspricht. Dem Auflagetisch 32 können auch noch nicht näher dargestellte Kontrollmittel zur Feststellung von Bandfehlern zugeordnet sein. Die Trennvorrichtung 6 enthält eine thermische, beispielsweise Infrarot- oder Ultraschall- Schneidvorrichtung 6a und eine mechanische Schneidvorrichtung 6b, die je nach Materialeigenschaften des zu behandelnden Bandes wahlweise zum Einsatz kommen können. Die Überführvorrichtung 10 zwischen der Trennvorrichtung 6 und der Faltstation 12 weist zunächst nach der Trennvorrichtung 6 einen mittels eines Antriebes 38, z.B. eines fluidbetätigten Kolben/Zylinder-Aggregates, oszillierend angetriebenen Förderarm 40 auf, der den Bandabschnitt 8 von der Trennvorrichtung 6 an eine Schiene 42 überführt. Letztere ist mittels eines oszillierenden Antriebes 44 hin- und hergehend angetrieben, um den Bandabschnitt der Faltstation zuzuführen, wie aus Figur 4a hervorgeht.

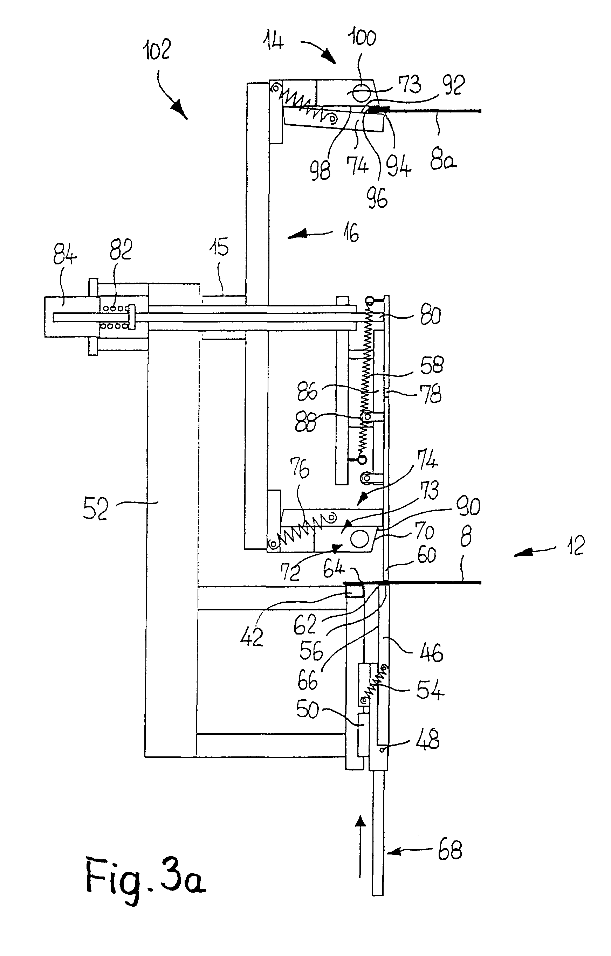

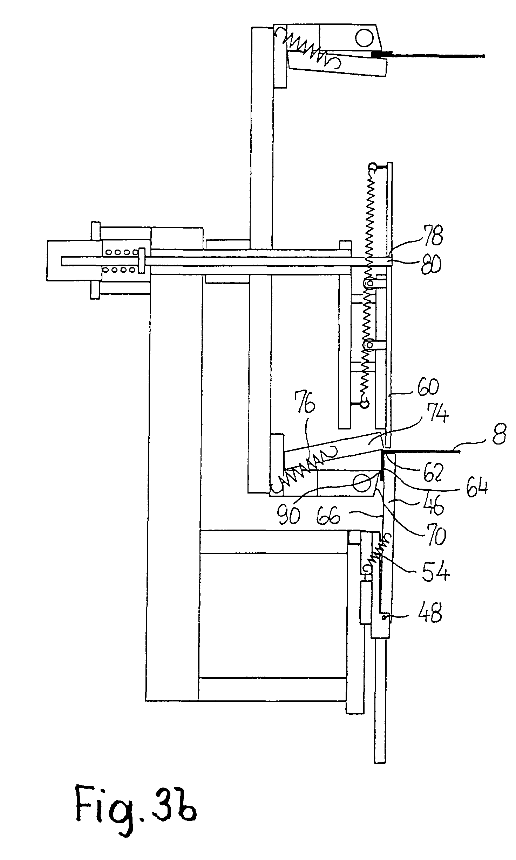

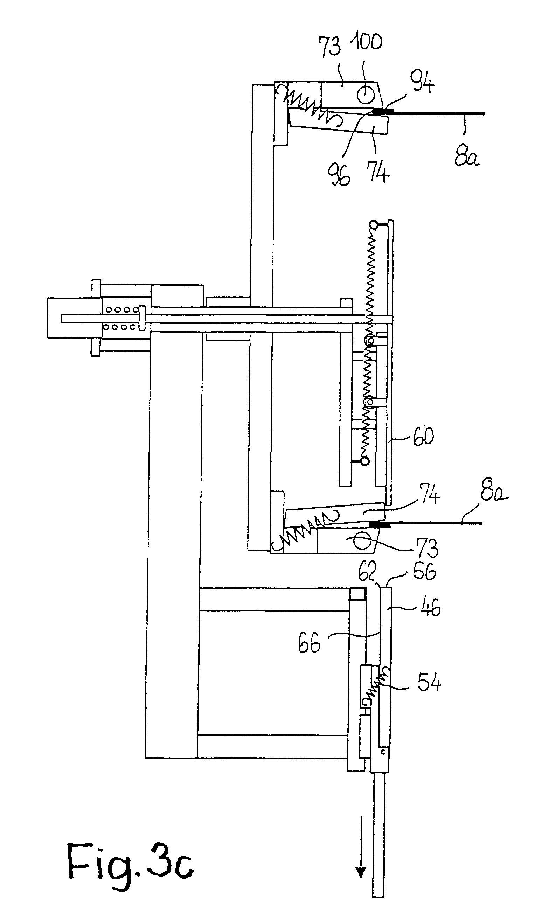

In den Figuren 3a bis 3c ist eine Hälfte der Faltstation schematisch dargestellt. Spiegelbildlich hierzu existiert eine zweite Hälfte, die identisch aufgebaut ist, wie aus den Figuren 4a bis 4h hervorgeht. Die Faltstation 12 enthält ein Auflageglied 46, das um eine Drehachse 48 verschwenkbar an einem Schlitten 50 angeordnet ist, der im Maschinengestell 52 auf- und abgehend verfahrbar gelagert ist. Eine Vorspannfeder 54 spannt das Auflageglied 46 in die senkrechte Grundstellung vor. Das Auflageglied 46 enthält an der Oberseite eine Auflagefläche 56, auf der der zu behandelnde Bandabschnitt 8 mittels der Schiene 42 überführt und abgelegt wird (Figur 4a). Ein gegen die Auflagefläche 46 mittels einer Feder 58 vorgespanntes Halteglied 60 hält den Bandabschnitt 8 am Auflageglied 46 fest (Figur 4b). Das Auflageglied 46 besitzt weiter eine Hilfsfaltkante 62, die parallel zur Faltkante (96 in Figur 4g) der herzustellenden Falte (94 in Figur 4g) ausgerichtet ist und um die ein über die Auflagefläche vorstehender Bandteil 64 gegen eine an die Hilfsfaltkante 62 angrenzende Stützfläche 66 faltbar ist (Figuren 4c und 4d). Die Stützfläche 66 ist im wesentlichen senkrecht zur Auflagefläche 56 ausgerichtet. Das Auflageglied 46 ist mittels eines in Figur 2 gezeigten Antriebes 68, z.B. eines fluidbetätigten Kolben/Zylinder-Aggregates, aus der in Figur 3a bzw. 4b gezeigten Grundstellung in die in Figur 3b bzw. 4d gezeigte Faltstellung verfahrbar. Dabei gerät das Auflageglied 46 mit der schrägen Auflauffläche 70 eines Faltgliedes 72 in Berührung, welches den Bandteil 64 gegen die Stützfläche 66 umlegt (Figuren 3b, 4c und 4d). Dabei wird gleichzeitig ein Klemmglied 74 angehoben, welches verschwenkbar über dem Faltglied 72 angeordnet und mittels einer Feder 76 gegen das Faltglied 72 vorgespannt ist, welches gleichzeitig auch als Klemmglied 73 ausgebildet ist. Um das Anheben des Klemmgliedes 74 zu ermöglichen, ist das Halteglied 60 gegenüber der Hilfsfaltkante 62 des Auflagegliedes 46 zurückversetzt, so dass das Auflageglied 46 mit dem über das Faltglied 72 bzw Klemmglied 73 vorstehenden Klemmglied 74 zusammenwirken kann.

In der in Figur 3b gezeigten Faltstellung verrastet das Halteglied 60 mittels einer Öffnung 78 an einem Rastdorn 80, der mittels einer Feder 82 in diese Raststellung vorgespannt ist. Mittels eines Aktuators 84 kann der Rastdorn 80 aus der Arretierstellung zurückgezogen werden. Das Halteglied 60 ist an einer Schiene 86 mit Rollen 88 verschiebbar geführt, wobei die Schiene 86 ortsfest mit dem Maschinengestell 52 verbunden ist.

Die definitive Faltenbildung erfolgt gemäss den Figuren 4d bis 4f wie folgt. Das Faltglied 72 weist eine Stauchkante 90 auf, die wie aus Figur 4d hervorgeht, mit dem Ende des gegen die Stützfläche 66 umgelegten Bandteiles 64 zusammenwirkt, wobei die mittels der Vorspannfeder 54 gegen das Faltglied 72 vorgespannte Stützfläche 66 den Eingriff der Stauchkante 90 am Bandteil 64 verstärkt. Das Auflageglied 46 wird nun in die Ausgangsstellung zurückgezogen, wobei die Stauchkante 90 des Faltgliedes 72 den überstehenden Bandteil 64 gegen die Klemmfläche 92 des Klemmgliedes 74 staucht und dabei die definitive Falte 94 mit der Faltkante 96 bildet, die in der Ebene das Bandabschnittes 8a liegt, wie aus den Figuren 4e und 4f hervorgeht. Dabei wird die Falte 94 zwischen die Klemmflächen 92 des Klemmgliedes 74 und die Klemmfläche 98 des gleichzeitig auch als Klemmglied 73 ausgebildeten Faltgliedes 72 eingeklemmt, die coplanar zur Ebene des Bandabschnittes ausgerichtet sind (Figuren 4e und 4f). Das Klemmglied 73 enthält ein Heizelement 100, um die zwischen den Klemmflächen 92,98 eingespannte Falte 94 zu glätten und in der gelegten Form zu fixieren (Figur 4g). Das Glätten und Fixieren erfolgt während der Förderbewegung der karussellartigen Fördervorrichtung 16 von der Faltstation 12 zur Entladestation 18 (Figuren 4f bis 4h). Dort wird der gefaltete Bandabschnitt 8a mittels der Hebearme 20 bei geöffneten Klemmgliedern 73,74 in das Magazin 22 der Stapelvorrichtung 24 überführt.

Um die Anlage auf Bandabschnitte unterschiedlicher Länge einstellen zu können, ist die Anlage, wie bereits erwähnt, aus zwei Hälften 102,104 aufgebaut, die relativ zueinander verschiebbar sind, wie durch den Verschiebepfeil 106 in Figur 1 angedeutet ist.

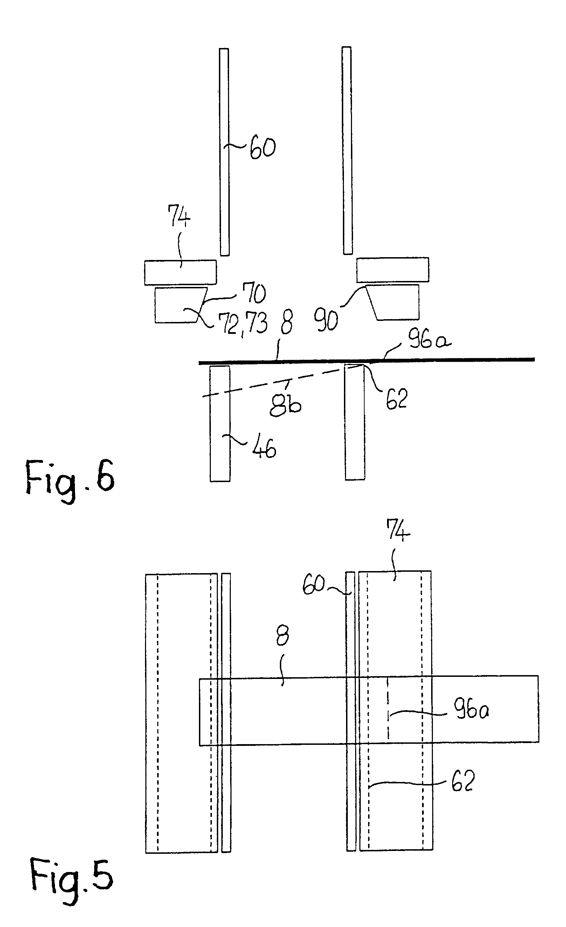

Die Figuren 5 und 6 zeigen die Verwendung der Anlage zur Herstellung eines Etiketts mit Mittenfaltung. Hierzu wird der Bandabschnitt 8 so auf die Auflageglieder 46,46 aufgelegt, dass der Bandabschnitt 8 etwa mit der Hälfte seiner Länge an der Hilfsfaltkante 62 aufliegt. Dann kann der Faltvorgang wie bisher erfolgen, wobei die Faltkante 96a der Mittenfaltung auf halber Länge des Bandabschnittes liegt.

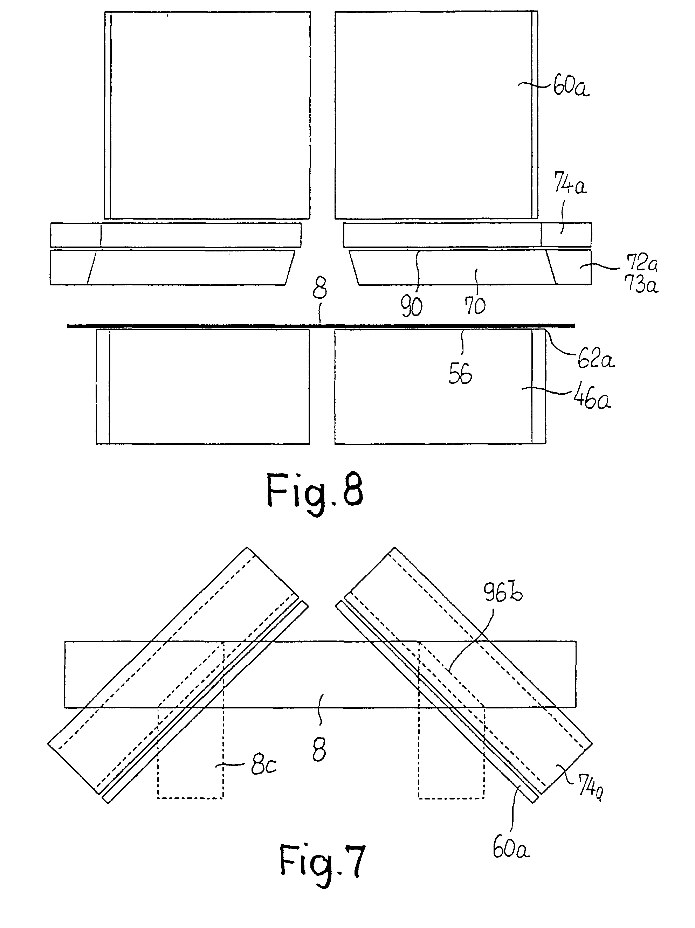

Die Figuren 7 und 8 zeigen die Abwandlung der Anlage zur Herstellung von Bandabschnitten mit Diagonalfaltung. Hierzu sind die Werkzeuge, d.h. die Auflageglieder 46a mit den Hilfsfaltkanten 62a, den Haltegliedern 60a, den Faltgliedern 72a und den Klemmgliedern 73a,74a parallel zu den zu erstellenden diagonalen Faltkanten 96b ausgerichtet. Der Faltvorgang erfolgt dann ebenfalls wiederum analog den Figuren 4a bis 4h.

### BEZUGSZEICHENLISTE

- 2: Liefervorrichtung
- 4: Band
- 6: Trennvorrichtung
- 6a: thermische Schneidvorrichtung
- 6b: mechanische Schneidvorrichtung
- 8: Bandabschnitte
- 8a: gefalteter Bandabschnitt
- 8b: gefalteter Bandabschnitt
- 8c: gefalteter Bandabschnitt
- 10: Überführvorrichtung
- 12: Faltstation
- 14: Klemmwerkzeug
- 15: Welle
- 16: karussellartige Fördervorrichtung
- 18: Entladestation
- 20: Heberarm
- 22: Magazin
- 24: Stapelvorrichtung
- 26: Drehpunkt
- 28: Aktuator
- 30: Verschiebewiderstand
- 31: Zuführvorrichtung
- 32: Auflagetisch
- 34: Förderelement
- 36: Sensor
- 38: Antrieb
- 40: Förderarm
- 42: Schiene
- 44: Antrieb
- 46: Auflageglied
- 46a: Auflageglied
- 48: Drehachse
- 50: Schlitten
- 52: Maschinengestell
- 54: Vorspannfeder
- 56: Auflagefläche
- 58: Feder
- 60: Halteglied
- 60a: Halteglied
- 62: Hilfsfaltkante
- 62a: Hilfsfaltkante
- 64: Bandteil
- 66: Stützfläche
- 68: Antrieb
- 70: Auflauffläche
- 72: Faltglied
- 72a: Faltglied
- 73: Klemmglied
- 73a: Klemmglied
- 74: Klemmglied
- 74a: Klemmglied
- 76: Feder
- 78: Öffnung
- 80: Rastdorn
- 82: Feder
- 84: Aktuator
- 86: Schiene
- 88: Rolle
- 90: Stauchkante
- 92: Klemmfläche von 74
- 94: definitive Falte
- 96: Faltkante
- 96a: Faltkante
- 96b: Faltkante
- 98: Klemmfläche von 73
- 100: Heizelemnt
- 102: Hälfte
- 104: Hälfte
- 106: Verschiebepfeil

## Patentansprüche

1. Verfahren zum Falten eines textilen Bandabschnittes, insbesondere eines Etikettenbandabschnittes, wobei man den Bandabschnitt (8) zunächst nahe einer Hilfsfaltkante (62,62a), deren Richtung der definitiven Faltkante (96,96a,96b) parallel ist, festhält und dann einen Bandteil (64) um die Hilfsfaltkante (62,62a) im wesentlichen senkrecht zur Ebene des Bandabschnittes (8) faltet und die definitive Falte (94) bildet und letztere durch Klemmen zwischen zwei Klemmflächen (92,98) glättet und fixiert, **dadurch gekennzeichnet, dass** man zur Bildung der definitiven Falte (94) das Ende des um die Hilfsfaltkante (62,62a) gefalteten Bandteiles (64) erfasst und den Bandteil (64) gegen eine im wesentlichen coplanar zur Ebene des Bandabschnittes (8) angeordnete Klemmfläche (92) eines Klemmgliedes (74,74a) unter Bildung der definitiven Falte (94) staucht und dann den im wesentlichen in der Ebene des Bandabschnittes (8,8a,8b,8c) liegenden gefalteten Bandteil (64) zwischen den im wesentlichen in der Ebene des Bandabschnittes angeordneten Klemmflächen (92,98) glättet und fixiert.

2. Anlage zur Ausführung des Verfahrens nach Anspruch 1, enthaltend:
- ein Auflageglied (46,46a) für einen zu faltenden Bandabschnitt (8) mit einer parallel zum Bandabschnitt (8) ausgerichteten Auflagefläche (56) und mit einer Hilfsfaltkante (62,62a), die parallel zu einer zu erstellenden Faltkante (96,96a,96b) ausgerichtet ist;
- ein mit der Auflagefläche (56) des Auflagegliedes (46,46a) zusammenwirkendes Halteglied (60,60a) für den Bandabschnitt (8);
- ein Faltglied (72,72a) zur Bildung einer Falte (94) des Bandabschnittes (8a,8b,8c) zwischen Klemmflächen (92,98) zweier Klemmglieder (73,73a,74,74a) zum Glätten und Fixieren der Falte,
**dadurch gekennzeichnet, dass** die Klemmflächen (92,98) der Klemmglieder (73,73a,74,74a) im wesentlichen coplanar zur Ebene des zu behandelnden Bandabschnittes (8) ausgerichtet sind, ferner dass der Hilfsfaltkante (62,62a) des Auflagegliedes (46,46a) eine im wesentlichen senkrecht zur Auflagefläche (56) ausgerichtete Stützfläche (66) zugeordnet ist, und dass das Faltglied (72,72a) eine mit der Stützfläche (66) zusammenwirkende Stauchkante (90) aufweist, um das Ende eines gegen die Stützfläche (66) umzulegenden Bandteiles (64) zu erfassen und den Bandteil (64) unter Bildung der herzustellenden definitiven Falte (94) gegen die Klemmfläche (92) eines Klemmgliedes (74,74a) zu stauchen.

3. Anlage nach Anspruch 2, **dadurch gekennzeichnet, dass** das Auflageglied (46,46a) zusammen mit dem gegen die Auflagefläche (56) vorspannbaren Halteglied (60,60a) aus einer Aufnahmestellung für einen Bandabschnitt (8) in eine Faltstellung aus- und einfahrbar ist.

4. Anlage nach Anspruch 2 oder 3, **dadurch gekennzeichnet, dass** das Faltglied (72,72a) eine schräge Auflauffläche (70) aufweist, derart, dass bei einer Relativbewegung zwischen Auflageglied (46,46a) und Faltglied (72,72a) letzteres einen über die Auflagefläche (56) vorstehenden Bandteil (64) um die Hilfsfaltkante (62,62a) gegen die Stützfläche (66) umlegt.

5. Anlage nach einem der Ansprüche 2 bis 4, **dadurch gekennzeichnet, dass** das Auflageglied (46,46a) und das Faltglied (72,72a) gegeneinander vorgespannt sind.

6. Anlage nach einem der Ansprüche 2 bis 5, **dadurch gekennzeichnet, dass** das Faltglied (72,72a) auch als Klemmglied (73,73a) ausgebildet ist, gegen das das andere Klemmglied (74,74a) vorzugsweise mittels einer Feder (76) vorgespannt und mittels des Auflagegliedes (46,46a) abhebbar ist.

7. Anlage nach einem der Ansprüche 2 bis 6, **dadurch gekennzeichnet, dass** das Halteglied (60,60a) mittels einer Vorspannfeder (58) gegen das Auflageglied (46,46a) vorgespannt ist und mittels des Auflagegliedes (46,46a) beim Ausfahren in eine Ausgangsstellung verfahrbar ist, in der es mittels einer lösbaren Raste (80) verrastbar ist.

8. Anlage nach einem der Ansprüche 2 bis 7, **dadurch gekennzeichnet, dass** das Halteglied (60,60a) gegenüber der Hilfsfaltkante (62,62a) der Auflagefläche (56) des Auflagegliedes (46,46a) zurückversetzt ist und die Auflagefläche (56) mittels der Hilfsfaltkante (62,62a) mit dem über das Faltglied (72,72a) vorstehend angeordneten Klemmglied (74,74a) zusammenwirkt, um dieses beim Ausfahren des Auflagegliedes (46,46a) vom Faltglied (72,72a) abzuheben.

9. Anlage nach einem der Ansprüche 2 bis 8, **dadurch gekennzeichnet, dass** mindestens eines der Klemmglieder (73,73a,74,74a) mit einem Heizelement (100) versehen ist.

10. Anlage nach einem der Ansprüche 2 bis 9, **dadurch gekennzeichnet, dass** das Auflageglied (46,46a) und das Halteglied (60,60a) stationär an einer Faltstation (12) und das Faltglied (72,72a) mit dem Klemmglied (74,74a) an einer von der Faltstation (12) zur Entladestation (18) verfahrbaren Fördereinrichtung (16), vorzugsweise einem rotierenden Träger angeordnet sind.

11. Anlage nach Anspruch 10, **dadurch gekennzeichnet, dass** die Fördereinrichtung (16) mehrere über ihre Länge verteilt angeordnete Faltglieder (72,72a) und Klemmglieder (74,74a) aufweist.

12. Anlage nach einem der Ansprüche 2 bis 11, **dadurch gekennzeichnet, dass** sie zur Herstellung von Bandabschnitten (8a,8b,8c) mit zwei Falten einen weiteren Werkzeugsatz (102) aufweist, der vorzugsweise zum ersten Werkzeugsatz (104) spiegelbildlich und im Abstand einstellbar angeordnet ist.

13. Anlage nach einem der Ansprüche 2 bis 12, **dadurch gekennzeichnet, dass** dem Auflageglied (46,46a) eine Liefervorrichtung (2) für die Bandabschnitte (8) zugeordnet ist.

14. Anlage nach Anspruch 13, **dadurch gekennzeichnet, dass** die Liefervorrichtung (2) eine Zuführvorrichtung (31) zum intermittierenden Zuführen eines kontinuierlichen Bandes (4) zu einer Trennvorrichtung (6), um Bandabschnitte (8) vorbestimmbarer Länge abzutrennen, und eine Überführvorrichtung (10) aufweist, um die Bandabschnitte (8) dem Auflageglied (46,46a) an einer Faltstation (12) zuzuführen.

15. Anlage nach Anspruch 14, **dadurch gekennzeichnet, dass** die Zuführvorrichtung (31) einen nur in Förderrichtung wirksamen, entsprechend der vorbestimmten Länge des abzutrennenden Bandabschnittes (8) einstellbares Förderelement (34) aufweist.

16. Anlage nach Anspruch 14 oder 15, **dadurch gekennzeichnet, dass** die Trennvorrichtung (6) eine mechanische Schneidvorrichtung (6b) und eine thermische Schneidvorrichtung (6a) aufweist, die wahlweise einsetzbar sind.

17. Anlage nach einem der Ansprüche 2 bis 16, **dadurch gekennzeichnet, dass** sie an einer Entladestation (18) eine Stapelvorrichtung (24) zum Stapeln der gefalteten Bandabschnitte (8a) aufweist.

18. Anlage nach Anspruch 17, **dadurch gekennzeichnet, dass** die Stapelvorrichtung (24) ein Magazin (22) aufweist, in dem die gefalteten Bandabschnitte (8a,8b,8c) gegen einen Verschiebewiderstand (30) einbringbar und haltbar sind.

19. Anlage nach einem der Ansprüche 2 bis 18, **dadurch gekennzeichnet, dass** sie zur Herstellung von Bandabschnitten (8a) mit Endfaltung ausgebildet ist.

20. Anlage nach einem der Ansprüche 2 bis 18, **dadurch gekennzeichnet, dass** sie zur Herstellung von Bandabschnitten (8b) mit Mittenfaltung ausgebildet ist.

21. Anlage nach einem der Ansprüche 2 bis 18, **dadurch gekennzeichnet, dass** sie zur Herstellung von Bandabschnitten (8c) mit Diagonalfaltung ausgebildet ist.

## Claims

1. A method for folding a textile strip section, in particular a label strip section, the strip section (8) first being held firmly close to an auxiliary folding edge (62, 62a) whose direction is parallel to the definitive folding edge (96, 96a, 96b), and then a strip portion (64) being folded around the auxiliary folding edge (62, 62a) substantially perpendicular to the plane of the strip section (8) and the definitive fold (94) being formed and the latter being smoothed and fixed by being clamped between two clamping surfaces (92, 98), **characterized in that**, in order to form the definitive fold (94), the end of the strip portion (64) folded around the auxiliary folding edge (62, 62a) is gripped and the strip portion (64) is compressed against a clamping surface (92) of a clamping element (74, 74a) arranged substantially co-planar with the plane of the strip section (8) thereby forming the definitive fold (94), and then the folded strip portion (64) lying substantially in the plane of the strip section (8, 8a, 8b, 8c) is smoothed and fixed between the clamping surfaces (92, 98) arranged substantially in the plane of the strip section.

2. An installation for performing the method of claim 1, comprising:
- a support element (46, 46a) for a strip section (8) to be folded, having a support surface (56) oriented parallel to the strip section (8) and having an auxiliary folding edge (62, 62a) which is oriented parallel to a folding edge (96, 96a, 96b) to be created;
- a holding element (60, 60a) co-operating with the support surface (56) of the support element (46, 46a), for the strip section (8);
- a folding element (72, 72a) for forming a fold (94) of the strip section (8a, 8b, 8c) between clamping surfaces (92, 98) of two clamping elements (73, 73a, 74, 74a) for smoothing and fixing the fold,
**characterized in that** the clamping surfaces (92, 98) of the clamping elements (73, 73a, 74, 74a) are oriented substantially co-planar with the plane of the strip section (8) to be treated, moreover, **in that** the auxiliary folding edge (62, 62a) of the support element (46, 46a) is assigned a supporting surface (66) oriented substantially perpendicular to the support surface (56), and **in that** the folding element (72, 72a) has a compression edge (90) that co-operates with the supporting surface (66) in order to grip the end of a strip portion (64) to be turned over against the supporting surface (66) and to compress the strip portion (64) against the clamping surface (92) of a clamping element (74, 74a), thereby forming the definitive fold (94) to be produced.

3. The installation as claimed in claim 2, **characterized in that** the support element (46, 46a), together with the holding element (60, 60a) that can be biased against the support surface (56), can be moved out and in from a holding position for a strip section (8) into a folding position.

4. The installation as claimed in claim 2 or 3, **characterized in that** the folding element (72, 72a) has an oblique run-on surface (70) such that, during a relative movement between support element (46, 46a) and folding element (72, 72a), the latter turns over a strip portion (64) projecting beyond the support surface (56) around the auxiliary folding edge (62, 62a) and against the supporting surface (66).

5. The installation as claimed in one of claims 2 to 4, **characterized in that** the support element (46, 46a) and the folding element (72, 72a) are biased against each other.

6. The installation as claimed in one of claims 2 to 5, **characterized in that** the folding element (72, 72a) is also designed as a clamping element (73, 73a) against which the other clamping element (74, 74a) is biased, preferably by means of a spring (76), and can be raised by means of the support element (46, 46a).

7. The installation as claimed in one of claims 2 to 6, **characterized in that** the holding element (60, 60a) is biased against the support element (46, 46a) by means of a bias spring (58) and can be moved out by means of the support element (46, 46a) into an initial position in which it can be latched by means of a releasable latch (80).

8. The installation as claimed in one of claims 2 to 7, **characterized in that** the holding element (60, 60a) is set back with respect to the auxiliary folding edge (62, 62a) of the support surface (56) of the support element (46, 46a), and the support surface (56) co-operates by means of the auxiliary folding edge (62, 62a) with the clamping element (74, 74a) arranged to project beyond the folding element (72, 72a), in order to raise said clamping element (74, 74a) off the folding element (72, 72a) as the support element (46, 46a) is moved out.

9. The installation as claimed in one of claims 2 to 8, **characterized in that** at least one of the clamping elements (73, 73a, 74, 74a) is provided with a heating element (100).

10. The installation as claimed in one of claims 2 to 9, **characterized in that** the support element (46, 46a) and the holding element (60, 60a) are arranged in a stationary manner on a folding station (12), and the folding element (72, 72a) with the clamping element (74, 74a) is arranged on a conveying device (16), preferably a rotating carrier, which can be moved from the folding station (12) to the unloading station (18).

11. The installation as claimed in claim 10, **characterized in that** the conveying device (16) has a plurality of folding elements (72, 72a) and clamping elements (74, 74a) distributed over its length.

12. The installation as claimed in one of claims 2 to 11, **characterized in that** in order to produce strip sections (8a, 8b, 8c) with two folds, it has a further tool set (102) which is preferably arranged as a reversed image of the first tool set (104) and at an adjustable distance therefrom.

13. The installation as claimed in one of claims 2 to 12, **characterized in that** the support element (46, 46a) is assigned a delivery device (2) for the strip sections (8).

14. The installation as claimed in claim 13, **characterized in that** the delivery device (2) comprises a feed device (31) for the intermittent feeding of a continuous strip (4) to a severing device (6) in order to sever strip sections (8) of a pre-determinable length, and a transfer device (10) in order to feed the strip sections (8) to the support element (46, 46a) at a folding station (12).

15. The installation as claimed in claim 14, **characterized in that** the feed device (31) has a conveying element (34) which acts only in the conveying direction and can be adjusted in accordance with the predetermined length of the strip section (8) to be severed.

16. The installation as claimed in claim 14 or 15, **characterized in that** the severing device (6) has a mechanical cutting device (6b) and a thermal cutting device (6a) which can be used alternatively.

17. The installation as claimed in one of claims 2 to 16, **characterized in that** at an unloading station (18) it has a stacking device (24) for stacking the folded strip sections (8a).

18. The installation as claimed in claim 17, **characterized in that** the stacking device (24) has a magazine (22) into which the folded strip sections (8a, 8b, 8c) can be moved against a displacement resistance (30) and can be held.

19. The installation as claimed in one of claims 2 to 18, **characterized in that** it is designed to produce strip sections (8a) with an end fold.

20. The installation as claimed in one of claims 2 to 18, **characterized in that** it is designed to produce strip sections (8b) with a mid-length fold.

21. The installation as claimed in one of claims 2 to 18, **characterized in that** it is designed to produce strip sections (8c) with a diagonal fold.

## Revendications

1. Procédé pour plier un segment de ruban textile, en particulier un segment de ruban qui sert d'étiquette, selon lequel on maintient le segment de ruban (8) d'abord près d'un bord de pli auxiliaire (62, 62a) dont la direction est parallèle au bord de pli (96, 96a, 96b) définitif, puis on plie autour du bord de pli auxiliaire (62, 62a) une partie de ruban (64) presque perpendiculairement au plan du segment de ruban (8) et on forme le pli définitif (94) et on le lisse et on le fixe en le serrant entre deux surfaces de serrage (92, 98),
**caractérisé en ce que**
pour former le pli définitif (94), on saisit l'extrémité de la partie de ruban (64) pliée autour du bord de pli auxiliaire (62, 62a) et on aplatit en formant le pli définitif (94) la partie de ruban (64) contre une surface de serrage (92) - d'un organe de serrage (74, 74a) - disposée presque coplanairement au plan du segment de ruban (8), et ensuite on lisse et on fixe entre les surfaces de serrage (92, 98), disposées pratiquement dans le plan du segment de ruban, la partie de ruban (64) pliée qui se trouve pratiquement dans le plan du segment de ruban (8, 8a, 8b, 8c).

2. Installation pour exécuter le procédé selon la revendication 1, comprenant :
- un organe de soutien (46, 46a) destiné à un segment de ruban (8) à plier et comportant une surface de soutien (56) orientée parallèlement au segment de ruban (8) et un bord de pli auxiliaire (62, 62a) orienté parallèlement à un bord de pli (96, 96a, 96b) à produire,
- un organe de maintien (60, 60a), destiné au segment de ruban (8), qui agit conjointement avec la surface de soutien (56) de l'organe de soutien (46, 46a),
- un organe de pliage (72, 72a) pour former un pli (94) du segment de ruban (8a, 8b, 8c) entre des surfaces de serrage (92, 98) de deux organes de serrage (73, 73a, 74, 74a) destinés à lisser et à fixer le pli,
**caractérisée en ce que**
les surfaces de serrage (92, 98) des organes de serrage (73, 73a, 74, 74a) sont orientées presque coplanairement au plan du segment de ruban (8) à traiter, en outre une surface d'appui (66) orientée presque perpendiculairement à la surface de soutien (56) est associée au bord de pli auxiliaire (62, 62a) de l'organe de soutien (46, 46') et l'organe de pliage (72, 72a) présente un bord d'aplatissement (90) qui agit conjointement avec la surface d'appui (66) afin de saisir l'extrémité d'une partie de ruban (64) à rabattre sur la surface d'appui (66) et d'aplatir la partie de ruban (64) en formant le pli (94) définitif à fabriquer contre la surface de serrage (92) d'un organe de serrage (74, 74a).

3. Installation selon la revendication 2,
**caractérisée en ce que**
l'organe de soutien (46, 46a) peut être rentré et sorti conjointement avec l'organe de maintien (60, 60a) qu'on peut précontraindre contre la surface de soutien (56) dans une position de pliage à partir d'une position de réception pour un segment de ruban (8).

4. Installation selon la revendication 2 ou 3,
**caractérisée en ce que**
l'organe de pliage (72, 72a) présente une surface de soutien (70) inclinée pour que lorsqu'il y a un mouvement relatif entre l'organe de soutien (46, 46a) et l'organe de pliage (72, 72a) celui-ci rabat sur la surface d'appui (66) autour du bord de pli auxiliaire (62, 62a) une partie de ruban (64) qui dépasse de la surface de soutien (56).

5. Installation selon l'une des revendications 2 à 4,
**caractérisée en ce que**
l'organe de soutien (46, 46a) et l'organe de pliage (72, 72a) sont précontraints l'un contre l'autre.

6. Installation selon l'une des revendications 2 à 5,
**caractérisée en ce que**
l'organe de pliage (72, 72a) prend aussi la forme d'un organe de serrage (73, 73a) contre lequel l'autre organe de serrage (74, 74a) peut être soulevé, de préférence à l'aide d'un ressort (76) précontraint et à l'aide de l'organe de soutien (46, 46a).

7. Installation selon l'une des revendications 2 à 6,
**caractérisée en ce que**
l'organe de maintien (60, 60a) est précontraint contre l'organe de soutien (46, 46a) à l'aide d'un ressort de précontrainte (58) et, lorsqu'il sort, peut être déplacé à l'aide de l'organe de soutien (46, 46a) dans une position initiale dans laquelle il peut être accroché au moyen d'une encoche (80) amovible.

8. Installation selon l'une des revendications 2 à 7,
**caractérisée en ce que**
l'organe de maintien (60, 60a) est décalé en arrière par rapport au bord de pli auxiliaire (62, 62a) de la surface de soutien (56) de l'organe de soutien (46, 46a) et, à l'aide du bord de pli auxiliaire (62, 62a), la surface de soutien (56) agit conjointement avec l'organe de serrage (74, 74a) disposé en saillie au-dessus de l'organe de pliage (72, 72a) pour que l'organe de serrage soit soulevé de l'organe de pliage (72, 72a) lorsque l'organe de soutien (46, 46a) sort.

9. Installation selon l'une des revendications 2 à 8,
**caractérisée en ce qu'**
au moins un des organes de serrage (73, 73a, 74, 74a) est muni d'un élément chauffant (100).

10. Installation selon l'une des revendications 2 à 9,
**caractérisée en ce que**
l'organe de soutien (46, 46a) et l'organe de maintien (60, 60a) sont disposés à demeure sur un poste de pliage (12) et l'organe de pliage (72, 72a) ainsi que l'organe de serrage (74, 74a) sur une installation de transport (16), de préférence un support tournant, mobile depuis le poste de pliage (12) jusqu'au poste de déchargement (18).

11. Installation selon la revendication 10,
**caractérisée en ce que**
l'installation de transport (16) présente plusieurs organes de pliage (72, 72a) et plusieurs organes de serrage (74, 74a) répartis sur sa longueur.

12. Installation selon l'une des revendications 2 à 11,
**caractérisée en ce que**
pour fabriquer des segments de ruban (8a, 8b, 8c) munis de deux plis, elle présente un autre ensemble d'outils (102) qui est de préférence disposé en symétrie de miroir par rapport au premier ensemble d'outils (104) et dont on peut régler l'écart.

13. Installation selon l'une des revendications 2 à 12,
**caractérisée en ce qu'**
un dispositif de livraison (2) pour les segments de ruban (8) est associé à l'organe de soutien (46, 46a).

14. Installation selon la revendication 13,
**caractérisée en ce que**
le dispositif de livraison (2) présente un dispositif d'acheminement (31) destiné à acheminer de façon intermittente une bande continue (4) vers un dispositif de séparation (6) destiné à séparer des segments de ruban (8) de longueur prédéterminable et un dispositif de transfert (10) destiné à acheminer les segments de ruban (8) à la surface de soutien (46, 46a) sur un poste de pliage (12).

15. Installation selon la revendication 14,
**caractérisée en ce que**
le dispositif d'acheminement (31) présente un élément de transport (34) qui n'agit qu'en direction de transport et qu'on peut régler en fonction de la longueur prédéterminée du segment de ruban (8) à séparer.

16. Installation selon la revendication 14 ou 15,
**caractérisée en ce que**
le dispositif de séparation (6) présente un dispositif de coupe (6b) mécanique et un dispositif de coupe (6a) thermique qu'on peut utiliser au choix.

17. Installation selon l'une des revendications 2 à 16,
**caractérisée en ce que**
sur un poste de déchargement (18), elle présente un dispositif d'empilement (24) destiné à empiler les segments de ruban (8a) pliés.

18. Installation selon la revendication 17,
**caractérisée en ce que**
le dispositif d'empilement (24) présente un magasin (22) dans lequel on peut introduire et conserver les segments de ruban (8a, 8b, 8c) pliés contre une résistance de déplacement (30).

19. Installation selon l'une des revendications 2 à 18,
**caractérisée en ce qu'**
elle est conçue pour fabriquer des segments de ruban (8a) munis d'un pli terminal.

20. Installation selon l'une des revendications 2 à 18,
**caractérisée en ce qu'**
elle est conçue pour fabriquer des segments de ruban (8b) munis d'un pli central.

21. Installation selon l'une des revendications 2 à 18,
**caractérisée en ce qu'**
elle est conçue pour fabriquer des segments de ruban (8b) munis d'un pli diagonal.
